(19) Europäisches Patentamt
European Patent Office
Office européen des brevets

(11) Veröffentlichungsnummer: 0 334 172 A1

(12) EUROPÄISCHE PATENTANMELDUNG

(21) Anmeldenummer: 89104515.5

(22) Anmeldetag: 14.03.89

(51) Int. Cl.[4]: C09B 62/503 , D06P 1/384

(30) Priorität: 22.03.88 DE 3809525

(43) Veröffentlichungstag der Anmeldung: 27.09.89 Patentblatt 89/39

(84) Benannte Vertragsstaaten: CH DE FR GB LI

(71) Anmelder: BAYER AG
D-5090 Leverkusen 1 Bayerwerk(DE)

(72) Erfinder: Jäger, Horst, Dr.
Carl-Rumpff-Strasse 37
D-5090 Leverkusen 1(DE)
Erfinder: Harms, Wolfgang, Dr.
Osenauer Strasse 46
D-5068 Odenthal(DE)
Erfinder: Wendisch, Detlef, Dr.
Steinenkamp 1
D-5060 Bergisch Gladbach 2(DE)
Erfinder: Wolff, Joachim, Dr.
Schlinghovener Strasse 38
D-5068 Odenthal-Glöbusch(DE)

# (54) Reaktivfarbstoffe.

(57) Neue Reaktivfarbstoffe der allgemeinen Formel

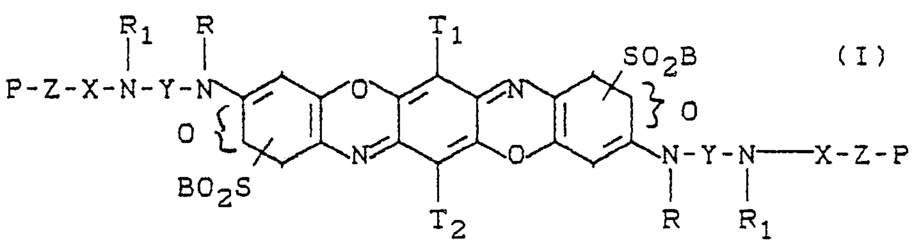

(I)

mit den in der Beschreibung angegebenen Substituentenbedeutungen liefern auf hydroxyl- und amidgruppenhaltigen Materialen licht- und naßechte Färbungen.

EP 0 334 172 A1

## Reaktivfarbstoffe

Gegenstand der Erfindung sind neue Reaktivfarbstoffe aus der Reihe der Triphendioxazine, die der allgemeinen Formel (I) entsprechen

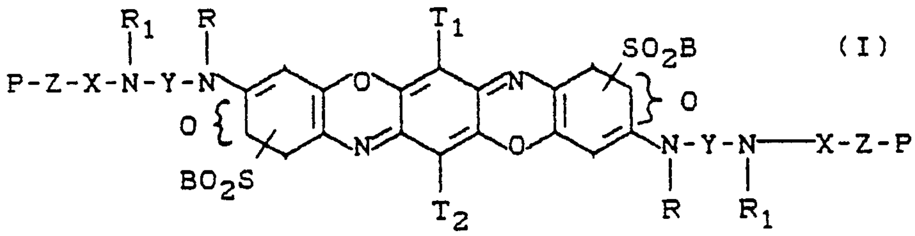

(I)

worin
B = $CH=CH_2$ oder $CH_2CH_2W$
worin
W = abspaltbare Gruppe wie $OSO_3H$, Cl, $S_2O_3H$, $OCOCH_3$, $OPO_3H_2$, $-N(CH_3)_3$
$T_1$, $T_2$ = H, Cl, Br, $C_1$-$C_4$-Alkoxy, $C_1$-$C_4$-Alkyl, gegebenenfalls substituiertes Phenyl oder Phenoxy
R = H oder gegebenenfalls substituiertes $C_1$-$C_4$-Alkyl
Y = gegebenenfalls substituierter zweiwertiger aliphatischer Rest
X = CO oder $SO_2$
P = COOH oder $SO_3H$
$R_1$ = H, gegebenenfalls substituiertes $C_1$-$C_4$-Alkyl, wobei $R_1$ zusammen mit R auch für Alkylen, vorzugsweise $-CH_2CH_2-$, stehen kann
Z = zweiwertiger organischer Rest
In Formel (I) steht die $SO_2B$-Gruppe in o-Stellung zum Substituenten

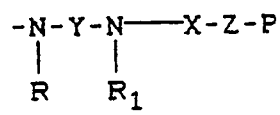

Die wahrscheinliche Struktur ist die folgende

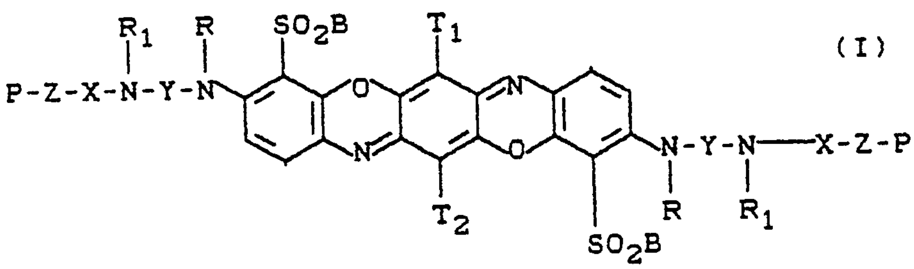

(I)

Zweiwertige organische Reste Z sind insbesondere die Reste $Z_1$ und $Z_2$, wobei $Z_1$ = $C_1$-$C_6$-Alkylen, das Kohlenstoffdoppelbindungen enthalten und substituiert bzw. durch Heteroatome oder Heteroatome enthaltende Gruppen, z. B. O, NH, S, $-NCH_3$, unterbrochen sein kann. Als Substituenten kommen beispielsweise in Frage: $CH_3$, $C_2H_5$, Halogenatome wie F, Cl und Br, und COOH,

$Z_2$ = 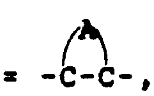

wobei A für den Rest eines gesättigten oder ungesättigten, eventuell auch Heteroatome enthaltenden Fünf- oder Sechsring steht, der gegebenenfalls substituiert sein kann. Beispiele für Substituenten des Ringes A sind: F, Cl, Br, $CH_3$, $OCH_3$, COOH, $SO_3H$, $NO_2$, OH.

Beispiele für gegebenenfalls substituiertes $C_1$-$C_4$-Alkyl der Symbole R bzw. $R_1$ sind: $CH_3$, $C_2H_5$, $CH(CH_3)_2$, $CH_2COOH$, $CH_2CH_2OSO_3OH$, $CH_2CH_2SO_3H$.

Der Rest Y trägt - falls er substituiert ist - beispielsweise folgende Substituenten: $SO_3H$, $OSO_3H$, COOH, $CH_3$, $OCH_3$, $C_2H_5$, $CH(CH_3)_2$ und Phenyl, das durch Cl, $CH_3$, $SO_3H$ substituiert sein kann.

Weiterhin kann Y durch Heteroatome oder Heteroatomgruppen oder durch die Phenylgruppierung unterbrochen sein.

Beispielhaft seien genannt: O, S, NH, $N(COCH_3)$, $NCH_3$. Rest Y sind beispielsweise folgende

$-(CH_2)_{2-6}$

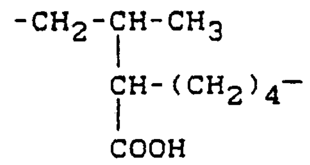

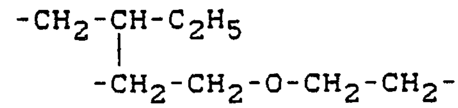

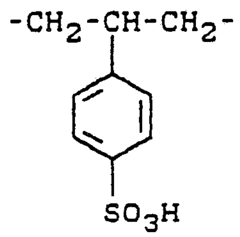

$-CH_2-CH_2-S-CH_2-CH_2-$

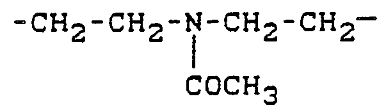

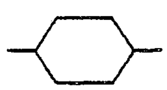

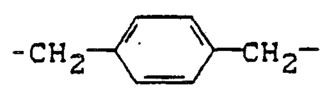

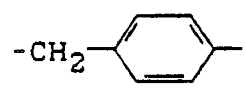

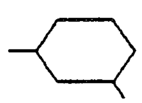

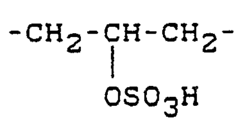

Ein geeigneter Rest

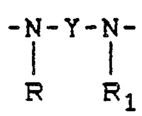

ist insbesondere auch

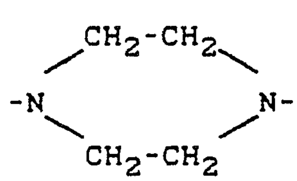

Für die Reste Z bzw. $Z_1$ und $Z_2$ seien beispielhaft folgende genannt:

$Z_1$: $-CH_2-$ $-CH_2-CH_2-$ $-CH_2-CH_2-CH_2-$

$-CH_2-CH_2-CH_2-CH_2$ 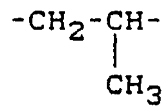

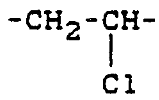 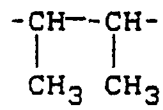 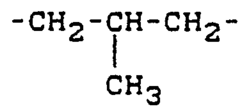

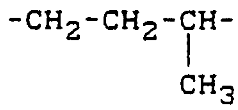 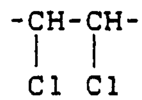 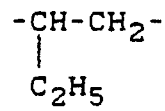

$-CH=CH-$ 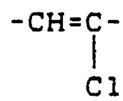 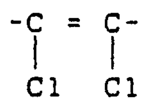 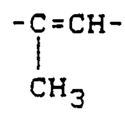

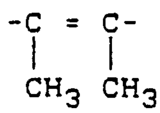 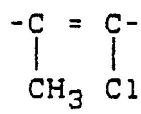 $-CH_2-CH_2-CH=CH-$

$-CH=CH-CH=CH-$ 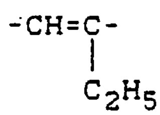 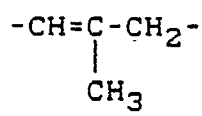

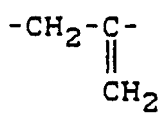

$Z_2$: 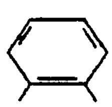 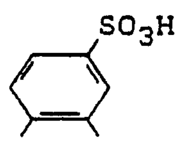 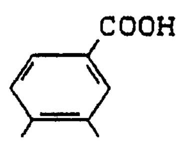 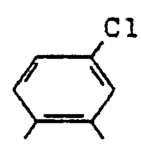

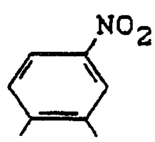 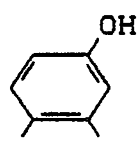 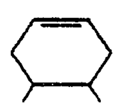 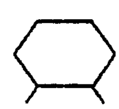

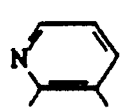 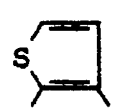

Im Rahmen der Formel (I) sind folgende Farbstoffe bevorzugt:

R und $R_1$ = H
B = $-CH_2CH_2OSO_3H$   $-CH=CH_2$
$T_1$ und $T_2$ = Cl

Y = $-CH_2-CH_2-$   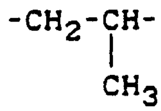   $-CH_2-CH_2-CH_2-$

$-CH_2-CH_2-CH_2-CH_2-$

Z = $-CH_2-$   $-CH_2-CH_2-CH_2-$   $-CH=CH-$

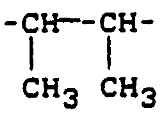   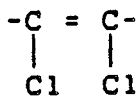   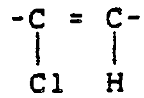

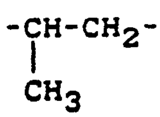   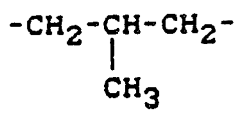   $-CH_2-CH=CH-$

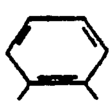   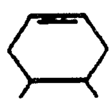   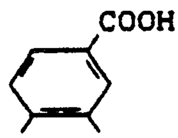   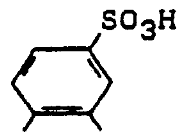

Im Rahmen der Formel (I) sind generell bevorzugt, Farbstoffe der Formeln
1a) X = CO und P = COOH
1b) X = CO und P = $SO_3H$
1c) X = $SO_2$ und P = COOH
1d) X = $SO_2$ und P = $SO_3H$
Besonders bevorzugt, sind dabei solche Farbstoffe (I) mit Z = $Z_2$.

Im Rahmen der Formeln (Ia) sind weiterhin bevorzugt solche Farbstoffe, in denen Z = $C_2$-$C_6$-Alkylen, das mindestens eine Kohlenstoffdoppelbindung und/oder ein Halogenatom, insbesondere Chloratom, enthält, sowie solche, in denen Z = verzweigtes, gegebenenfalls halogenhaltiges $C_2$-$C_6$-Alkylen bedeutet, sowie solche in denen Z = $C_3$-$C_6$-Alkylen, insbesondere $C_4$-$C_6$-Alkylen.

Gegenstand der Erfindung ist weiterhin ein Verfahren zur Herstellung der Verbindungen der Formel (I). Es besteht darin, daß man Verbindungen der allgemeinen Formel (II)

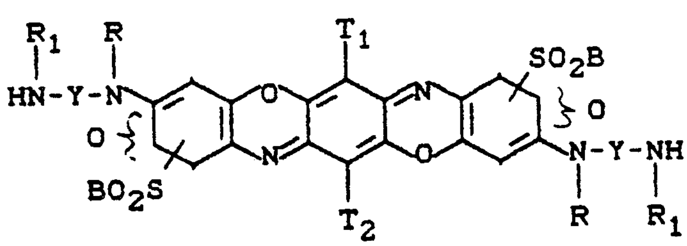   (II)

worin
$T_1$, $T_2$, R, $R_1$, Y und B die angegebene Bedeutung haben, mit den cyclischen Anhydriden der allgemeinen Formeln (IIIa), (IIIb) und (IIIc) umsetzt.

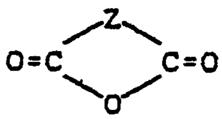
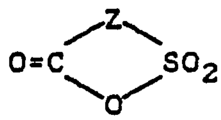
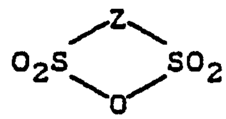

(IIIa) (IIIb) (IIIc)

worin
Z die angegebene Bedeutung hat.

Die Kondensation wird im allgemeinen in wäßriger oder wäßrig-organischer, bevorzugt aber wäßriger Phase bei Temperaturen von -5° C bis +40° C, bevorzugt 3 - 10° C und im pH-Bereich von 4 bis 9, bevorzugt 6 bis 7, durchgeführt. Verbindungen der Formel (II) sind aus der Europäischen Patentschrift 158 882 bekannt.

Beispiele für Verbindungen der Formeln (IIIa), (IIIb) und (IIIc) sind die cyclischen Anhydride der im folgenden aufgeführten Säuren:

Maleinsäure
Methylmaleinsäure
Dimethylmaleinsäure
Bernsteinsäure
Methylbernsteinsäure
2.3-Dimethylbernsteinsäure
Tetraethylbernsteinsäure
Chlorbernsteinsäure
2.3-Dichlorbernsteinsäure
2.2-Dimethylbernsteinsäure
Glutarsäure
3-Methylglutarsäure
3.3-Dimethylglutarsäure
2-Phenylglutarsäure
2.2-Dimethylglutarsäure
Adipinsäure
Phthalsäure
4-Chlorphthalsäure
4-Carboxyphthalsäure
4-Sulfophthalsäure
4-Methoxyphthalsäure
4.5-Methylendioxyphthalsäure
Hexahydrophthalsäure
4-Methyl-hexahydrophthalsäure
1,2,3,6-Tetrahydrophthalsäure
Tetrachlorphthalsäure
Naphthalsäure
Tetralin-1,8-dicarbonsäure
Biphenyl-2,2'-dicarbonsäure
cis-Cyclopentan-1,2-dicarbonsäure
Pyridin-2,3-dicarbonsäure
Thiophen-2,3-dicarbonsäure
Glutaronsäure
Itaconsäure
Citraconsäure
Chlorcitraconsäure
Muconsäure
Dihydromuconsäure
Ethylbernsteinsäure
Pimelinsäure
Propan-1,3-disulfonsäure
Benzol-1,2-disulfonsäure
4-Fluor-benzol-1,2-disulfonsäure

Naphthalin-1,2-disulfonsäure
Naphthalin-1,8-disulfonsäure
o-Carboxy-benzolsulfonsäure

Die neuen Farbstoffe geben auf Cellulose- sowie natürlichen synthetischen Polyamidmaterialien klare Färbungen. Sie zeichnen sich durch hohe Farbstärke aus.

Als wasserlösliche Reaktivfarbstoffe finden die neuen Farbstoffe bevorzugtes Interesse für das Färben von hydroxyl- und amidgruppenhaltigen Textilmaterialien, insbesondere von Materialien aus nativer und regenerierter Cellulose sowie synthetischen Polyamid- und Polyurethanfasern, Wolle und Seide.

Die genannten Materialien werden nach den für wasserlösliche Reaktivfarbstoffe allgemein bekannten und in der Technik üblichen Verfahren gefärbt oder bedruckt. Man erhält dann licht- und naßechte brillante Färbungen und Drucke.

Bei den Temperaturangaben in den Beispielen handelt es sich um ° C. Die Formeln der wasserlöslichen Reaktivfarbstoffe in der Beschreibung und in den Beispielen sind die der freien Säuren. Isoliert und angewandt werden die Farbstoffe im allgemeinen in Form ihrer Alkalisalze, insbesondere der Lithium-, Natrium- oder Kaliumsalze.

Die in den Beispielen angegebenen Farbkennzahlen beziehen sich auf Colour Index Hue Indication Chart (Indicator Numbers).

Die in den folgenden Beispielen angegebenen Formeln beziehen sich auf jeweils eines der bei der Umsetzung entstehenden isomeren Reaktionsprodukte, wobei bezüglich der Substituenten in den beiden äußeren aromatischen Ringen des Triphendioxazin-Systems der isomeren Reaktionsprodukte auf das unter Formel (I) Gesagte verwiesen wird.

<u>Beispiel 1</u>

0,1 mol des Triphendioxazinfarbstoffs der wahrscheinlichen Formel

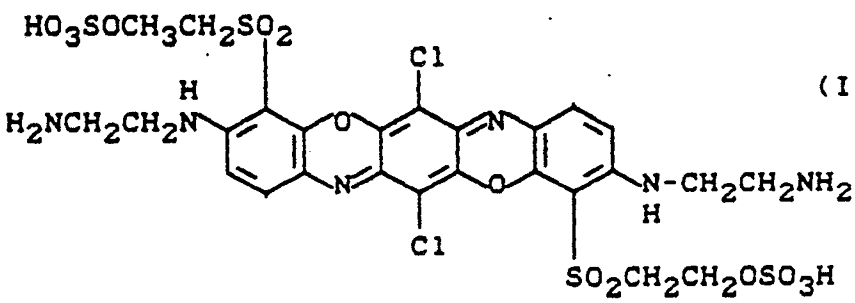

(I)

(hergestellt nach Beispiel 1 b) der Europäischen Patentschrift 158 882) werden in 1 l Eiswasser angerührt. Man trägt 0,2 mol fein gepulvertes Bernsteinsäureanhydrid ein und rührt bei 0 - 5° C, wobei man den pH durch Zutropfen von verdünnter Natronlauge im Bereich von 6,5 - 7,5 hält. Das Ausgangsmaterial geht während der Acylierung in Lösung. Der Farbstoff wird durch Sprühtrocknung isoliert. Man erhält ein blaues, leicht in Wasser lösliches Farbstoffpulver. In Form der freien Säure entspricht der Farbstoff der Formel

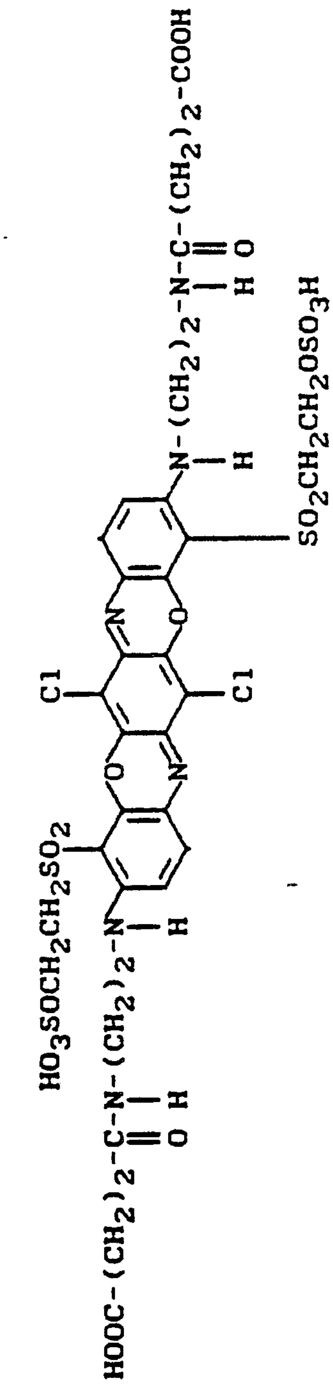

$\lambda_{max}$ 620

Der Farbstoff des Beispiels 1 wurde in der $^1$H-Resonanz (360 MHz) in DMSO-$D_6$ und in $D_2O$ gemessen. Die aromatischen Protonen bilden in $D_2O$ ein AB-System mit $\delta_A$ = 7,31 und $\delta_B$ = 6,547 ppm. $J_{AB}$ beträgt 9 Hz, damit wird die ortho-Ständigkeit dieser Wasserstoffe belegt. Für die $CH_2$-Gruppen findet man insgesamt 6 Absorptionsstellen mit den folgenden Shiftwerten $\delta$(ppm): 4,378 ($CH_2$, $\alpha$ zu $OSO_3H$), 3,92 ($CH_2$, $\alpha$ zu $SO_2$), 3,35 und 3,28 ($ArNHCH_2$-$CH_2NHCO$), 2,53 und 2,49 (NHCO-$CH_2$-$CH_2$-$CO_2H$). Die unterschiedlichen NH-Funktionen sind in $D_2O$ bereits ausgetauscht, erscheinen aber in DMSO-$D_6$ bei 8,13 und 7,86 ppm als Tripletts wegen Kopplung mit benachbarter $CH_2$-Gruppe. Das Signal bei 8,13 ppm ist dem Amid-NH zuzuordnen.

Er färbt Baumwolle nach einem der für Reaktivfarbstoffe üblichen Färbeverfahren aus langer Flotte in einem klaren Blau (Farbkennzahl 14).

Gleichfalls wertvolle Farbstoffe erhält man, wenn man nach den Angaben dieses Beispiels verfährt, aber anstelle von Bernsteinsäureanhydrid eine äquivalente Menge der nachfolgend aufgeführten Anhydride

einsetzt.

**Tabelle 1**

| Bsp. | Anhydrid | $\lambda_{max}$ | Farbkennzahl | Farbton auf BW |
|---|---|---|---|---|
| 1 | Maleinsäureanhydrid | 570 | 14 | brillantes Blau |
| 2 | Glutarsäureanhydrid | 580 | " | " |

**Tabelle 1 (Fortsetzung)**

| Bsp. | Anhydrid | $\lambda_{max}$ | Farbkennzahl | Farbton auf BW |
|---|---|---|---|---|
| 3 | Methylmaleinsäureanhydrid | 580 | " | " |
| 4 | Phthalsäureanhydrid | 580 | " | " |
| 5 | Dichlormaleinsäureanhydrid | 560 | " | " |
| 6 | Adipinsäureanhydrid | 580 | " | " |
| 7 | 1,2,3,6-Tetrahydrophthalsäureanhydrid | 580 | " | " |

Nach der Arbeitsweise des in Beispiel 1 beschriebenen Verfahrens erhält man weitere wertvolle Reaktivfarbstoffe, die Baumwolle in brillanten Blautönen mit der Farbkennzahl 14 färben, wenn man als Ausgangsmaterial die durch die Symbole R, $R_1$, Y, $T_1$ und $T_2$ charakterisierten Diaminotriphendioxazine der Formel

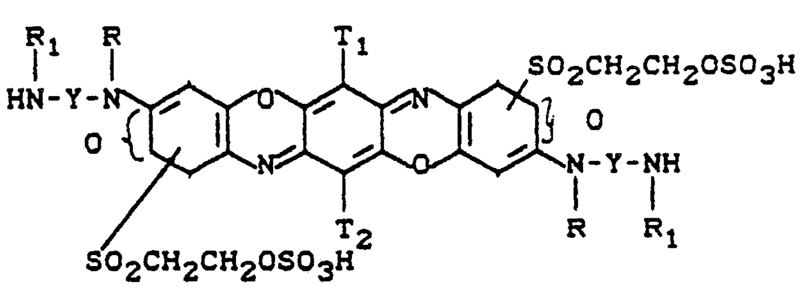

einsetzt und als Acylierungsmittel die den Resten Z zugrundeliegenden cyclischen Anhydride (IIIa) bis (IIIc) einsetzt.

**Tabelle 2**

| Bsp. | 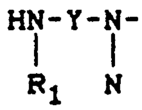 | $T_1$ | $T_2$ | Z |
|---|---|---|---|---|
| 1 | 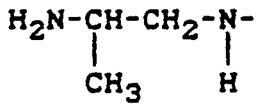 | Cl | Cl | $-CH_2-CH_2-$ |
| 2 | " | " | " | $-CH_2-CH_2-CH_2-$ |
| 3 | " | " | " | $-CH_2-CH_2-CH_2-CH_2-$ |
| 4 | " | " | " | 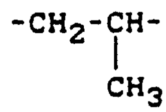 |
| 5 | " | " | " | 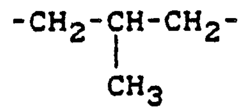 |
| 6 | 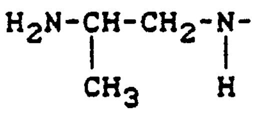 | Cl | Cl | -CH=CH- |
| 7 | " | " | " | 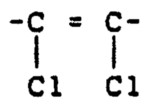 |
| 8 | " | " | " | 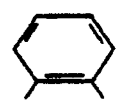 |
| 9 | 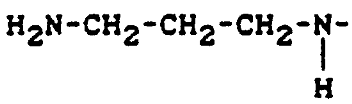 | " | " | $-CH_2-CH_2-$ |
| 10 | " | " | " | $-CH_2-CH_2-CH_2-$ |
| 11 | " | " | " | $-CH_2-CH_2-CH_2-CH_2-$ |

| Bsp. | $HN-Y-N$<br>$R_1$ $R$ | $T_1$ | $T_2$ | Z |
|---|---|---|---|---|
| 12 | $H_2N-CH_2-CH_2-CH_2-N-$<br>$H$ | Cl | Cl | $-CH-CH_2-$<br>$CH_3$ |
| 13 | " | " | " | $-CH=CH-$ |
| 14 | " | " | " | $-C = C-$<br>Cl Cl |
| 15 | " | " | " | $-C=C-$<br>$CH_3$ |
| 16 | " | " | " | 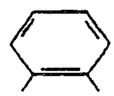 |
| 17 | " | " | " | 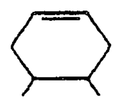 |
| 18 | " | " | " | 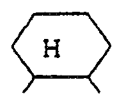 |
| 19 | 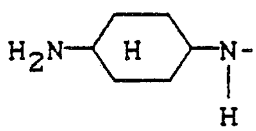 | " | " | $-CH_2-CH_2-$ |
| 20 | " | " | " | $-CH_2-CH_2-CH_2-$ |
| 21 | " | " | " | $-CH-CH_2-$<br>$CH_3$ |
| 22 | " | " | " | $-CH=CH-$ |
| 23 | " | " | " | $-C=CH-$<br>$CH_3$ |

| Bsp. | $HN(R_1)-Y-N(R)$ | $T_1$ | $T_2$ | Z |
|---|---|---|---|---|
| 24 | 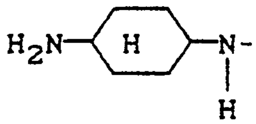 | Cl | Cl | $-C(Cl)=C(Cl)-$ |
| 25 | 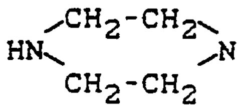 | " | " | $-CH_2-CH_2-$ |
| 26 | " | " | " | $-CH_2-CH_2-CH_2-$ |
| 27 | " | " | " | $-CH=CH-$ |
| 28 | " | " | " | 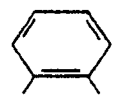 |
| 29 | $H_2N-CH_2-CH(OSO_3H)-CH_2-NH-$ | " | " | $-CH_2-CH_2$ |
| 30 | " | " | " | $-CH_2-CH_2-CH_2-$ |
| 31 | " | " | " | $-CH(CH_3)-CH_2-$ |
| 32 | " | " | " | $-CH=CH-$ |
| 33 | " | " | " | $-C(Cl)=C(Cl)-$ |
| 34 | " | " | " | $-CH(CH_3)-CH(CH_3)-$ |
| 35 | " | " | " | 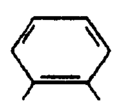 |

| Bsp. | $HN-Y-N$ <br> $R_1$ $R$ | $T_1$ | $T_2$ | Z |
|---|---|---|---|---|
| 36 | $H_2N-CH_2-CH-CH_2-NH-$ <br> $OSO_3H$ | Cl | Cl | 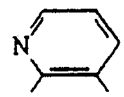 |
| 37 | " | " | " | 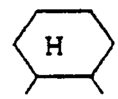 |
| 38 | $H_2N-CH_2-CH_2-O-CH_2-CH_2-HN$ | " | " | $-CH_2-CH_2-$ |
| 39 | " | " | " | $-CH_2-CH_2-CH_2-$ |
| 40 | " | " | " | $-CH_2-CH_2-CH_2-CH_2-$ |
| 41 | " | " | " | $-CH=CH-$ |
| 42 | " | " | " | 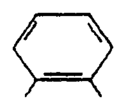 |
| 43 | " | " | " | 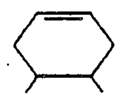 |
| 44 | " | " | " | 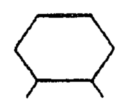 |
| 45 | " | " | " | $-C = C-$ <br> Cl Cl |
| 46 | $HN-CH_2-CH_2-N-$ <br> $CH_3$ $CH_3$ | " | " | $-CH_2-CH_2$ |
| 47 | " | " | " | $-CH_2-CH_2-CH_2-$ |
| 48 | " | " | " | $-CH_2-CH_2-CH_2-CH_2-$ |
| 49 | " | " | " | $-CH=CH-$ |

| Bsp. 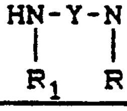 | | $T_1$ | $T_2$ | Z |
|---|---|---|---|---|
| 50 | 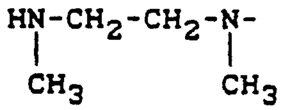 | Cl | Cl | 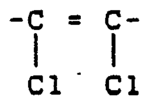 |
| 51 | " | " | " | 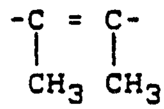 |
| 52 | " | " | " | 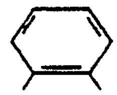 |
| 53 | " | " | " | 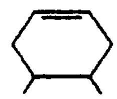 |
| 54 | " | " | " | 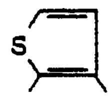 |
| 55 | $H_2N-CH_2-CH_2-NH-$ | Br | Br | $-CH_2-CH_2-$ |
| 56 | " | " | " | $-CH_2-CH_2-CH_2-$ |
| 57 | " | " | " | $-CH=CH-$ |
| 58 | " | " | " | $-CH_2-CH_2-CH_2-CH_2-$ |
| 59 | " | " | " | 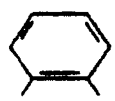 |
| 60 | " | $OCH_3$ | $OCH_3$ | $-CH_2-CH_2-$ |
| 61 | " | " | " | $-CH_2-CH_2-CH_2-$ |
| 62 | " | " | " | $-CH_2-CH_2-CH_2-CH_2-$ |
| 63 | " | " | " | $-CH=CH-$ |
| 64 | " | $OC_2H_5$ | $OC_2H_5$ | $-CH_2-CH_2-$ |
| 65 | " | " | " | $-CH_2-CH_2-CH_2-$ |

| Bsp. | HN-Y-N<br>\|   \|<br>$R_1$  R | $T_1$ | $T_2$ | Z |
|---|---|---|---|---|
| 66 | $H_2N-CH_2-CH_2-CH_2-CH_2-NH-$ | Cl | Cl | $-CH_2-CH_2-$ |
| 67 | " | " | " | $-CH_2-CH_2-CH_2-$ |
| 68 | " | " | " | $-CH_2-CH_2-CH_2-CH_2-$ |
| 69 | " | " | " | $-CH-CH_2-$<br>\|<br>$CH_3$ |
| 70 | " | " | " | $-CH=CH-$ |
| 71 | " | " | " | $-C = C-$<br>\|   \|<br>Cl  Cl |
| 72 | " | " | " | $-CH_2-CH-CH_2-$<br>\|<br>$CH_3$ |
| 73 | " | " | " | 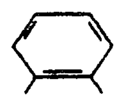 |
| 74 | " | " | " | 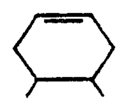 |
| 75 | " | " | " | 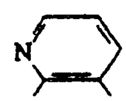 |
| 76 | $H_2N-CH_2-CH_2-NH-$ | " | " | $-CH_2-CH_2-CH_2-$ |
| 77 | " | " | " | $-CH_2-CH_2-$ |
| 78 | " | " | " | $-CF_2-CF_2-CF_2-$ |
| 79 | " | " | " | 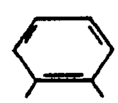 |
| 80 | " | " | " | 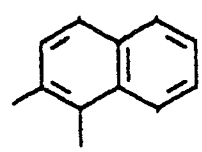 |

Die Farbstoffe der Beispiele 1 - 75 erhält man durch Umsetzung mit den cyclischen Anhydriden (IIIa), diejenigen der Beispiele 76 - 80 mit solchen der Formel (IIIc).

Beispiel 81

0.1 mol des Triphendioxazinfarbstoffs der wahrscheinlichen Formel

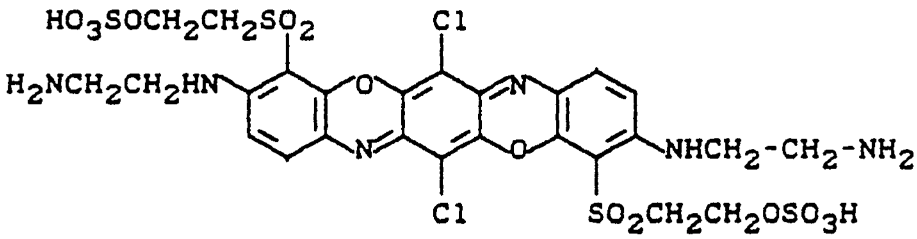

(hergestellt nach Beispiel Ic) der Europäischen Patentschrift 158 882) werden in 1 l Wasser angerührt. Man trägt 0,2 mol o-Benzoesäure-sulfonsäureanhydrid ein und rührt bei 15 °C - 20 °C, wobei man den pH durch Zutropfen von verdünnter Natronlauge zwischen pH 6 und 7 hält. Das Ausgangsmaterial geht während der Acylierung in Lösung. Der Farbstoff wird durch Zusatz eines Gemisches aus Natriumchlorid und Kaliumchlorid ausgesalzen. Nach dem Absaugen, Trocknen und Mahlen erhält man ein blaues, in Wasser leicht lösliches Farbstoffpulver. In Form der freien Säure entspricht der Farbstoff der Formel

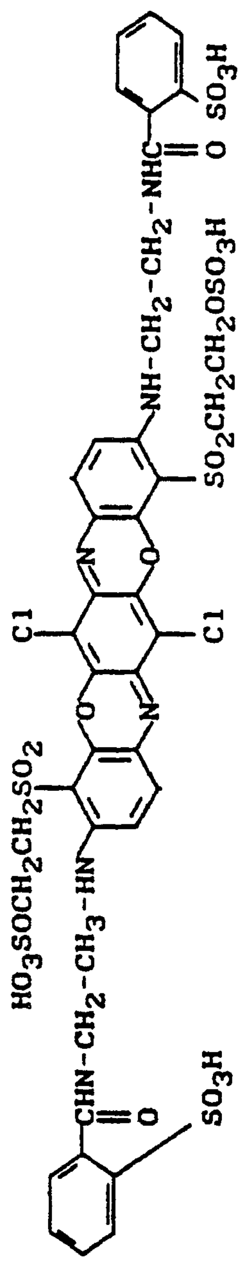

$\lambda_{max}$ 580

## Ansprüche

1. Reaktivfarbstoffe der allgemeinen Formel

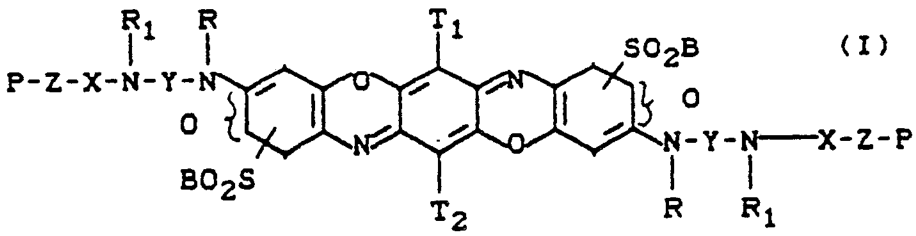

(I)

worin
B = CH-$CH_2$ oder $CH_2CH_2W$
worin
W = abspaltbare Gruppe wie $OSO_3H$, Cl, $S_2O_3H$, $OCOCH_3$, $OPO_3H_2$, -$N(CH_3)_3$
$T_1$, $T_2$ = H, Cl, Br, $C_1$-$C_4$-Alkoxy, $C_1$-$C_4$-Alkyl, gegebenenfalls substituiertes Phenyl oder Phenoxy
R = H oder gegebenenfalls substituiertes $C_1$-$C_4$-Alkyl
Y = gegebenenfalls substituierter zweiwertiger aliphatischer Rest
X = CO oder $SO_2$
P = COOH oder $SO_3H$
$R_1$ = H, gegebenenfalls substituiertes $C_1$-$C_4$-Alkyl, wobei $R_1$ zusammen mit R auch für Alkylen, vorzugsweise -$CH_2CH_2$-, stehen kann
Z = zweiwertiger organischer Rest.

2. Farbstoffe des Anspruchs 1 mit X = CO und P = COOH.

3. Farbstoffe des Anspruchs 1 mit X = CO und P = $SO_3H$.

4. Farbstoffe des Anspruchs 1 mit X = $SO_2$ und P = COOH.

5. Farbstoffe des Anspruchs 1 mit X = $SO_2$ und P = $SO_3H$.

6. Farbstoffe der Ansprüche 1 - 5 mit

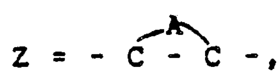

worin A = Rest eines gesättigten oder ungesättigten, gegebenenfalls Heteroatome enthaltenden und/oder gegebenenfalls substituierten 5- oder 6-Rings.

7. Farbstoffe der Ansprüche 1 - 5 mit Z = $C_2$ - $C_6$-Alkylen, das mindestens eine Kohlenstoffdoppelbindung und/oder Halogenatom enthält.

8. Farbstoffe der Ansprüche 1 - 5 mit Z = verzweigtes, gegebenenfalls halogenhaltiges $C_2$-$C_6$-Alkylen.

9. Farbstoffe der Ansprüche 1 - 5 mit Z = $C_3$-$C_6$-Alkylen, insbesondere $C_4$-$C_6$-Alkylen.

10. Verwendung der Farbstoffe der Ansprüche 1 - 9 zum Färben und Bedrucken von OH- und NH-haltigen Materialien.

Europäisches Patentamt

# EUROPÄISCHER RECHERCHENBERICHT

Nummer der Anmeldung

EP 89 10 4515

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 258 493 (HOECHST)<br>* Ansprüche 1-12,17; Beispiele 3-23 *<br>--- | 1,2,6,8-10 | C 09 B 62/503<br>D 06 P 1/384 |
| X | EP-A-0 258 686 (HOECHST)<br>* Ansprüche 1-4,6-10,12; Beispiele 1-16,18-33,36,37 *<br>----- | 1,3,6,10 | |
| | | | RECHERCHIERTE SACHGEBIETE (Int. Cl.4) |
| | | | C 09 B |

Der vorliegende Recherchenbericht wurde für alle Patentansprüche erstellt

| Recherchenort | Abschlußdatum der Recherche | Prüfer |
|---|---|---|
| DEN HAAG | 12-06-1989 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument